Europäisches Patentamt

European Patent Office

Office européen des brevets

(11) Publication number: 0 228 780
A2

# (12) EUROPEAN PATENT APPLICATION

(21) Application number: 86308102.2

(51) Int. Cl.⁴: H01B 17/58

(22) Date of filing: 20.10.86

(30) Priority: 08.11.85 US 796198

(43) Date of publication of application:
15.07.87 Bulletin 87/29

(84) Designated Contracting States:
DE FR GB IT

(71) Applicant: GENERAL MOTORS CORPORATION
General Motors Building 3044 West Grand
Boulevard
Detroit Michigan 48202(US)

(72) Inventor: Sovacool, David Kevin
224 North Colonial Drive
Cortland Ohio 44410(US)
Inventor: Van Slyke, Allan Seaburn
3931 County Line Road
Southington Ohio 44470(US)
Inventor: Bungo, Edward Martin
379 Cherry Hill Lane
Courtland Ohio 44410(US)

(74) Representative: Breakwell, John Neil Bower et
al
GM Patent Section Vauxhall Motors Limited
Luton Office (F6) P.O. Box No. 3 Kimpton
Road
Luton Bedfordshire LU2 OSY(GB)

(54) Grommet assembly.

(57) A grommet assembly is provided for attachment to an apertured panel within a limited access space around the aperture for passing a wire bundle through the aperture.

A grommet body (22) of the grommet assembly (20) includes a pivot support (34,36) extending therefrom and offset to one side thereof when the grommet body is placed in an attachment position overlying the panel aperture (I6). A peripheral stop flange (30) of the grommet body engageable with one surface (12) of the panel (I0) defines an attachment envelope (E) within that limited access space. A retainer (38) includes a pivot member (48) by means of which the retainer is pivotally joined to the pivot support to rotate towards the grommet body. At an operative position, a stop portion (40) of the retainer engages the other surface (I4) of the panel, and the retainer is sized so as to stay within the attachment envelope as the retainer rotates. A locking means (52,54) maintains the retainer in the operative position, thereby attaching the grommet assembly to the panel within the limited access space.

Fig. 7

## GROMMET ASSEMBLY

This invention relates to grommet assemblies as specified in the preamble of claim I, for example as disclosed in US-A-4 407 042.

Grommet assemblies are often used to pass a wire bundle through an aperture in a panel. In the automotive industry, wire bundles must often be passed through the bulkhead panel of a vehicle as it is being wired. A grommet assembly is desirable to protect the bundle from the sharp edges of the aperture formed through the sheet metal of the bulkhead panel.

A common known grommet is a simple flexible cylindrical rubber member designed to pop-fit through an aperture, with a wire or a small wire bundle passing therethrough. In modern vehicles, however, such simple grommets are often unsuitable, as it is necessary to protect and support much larger and heavier wire bundles. Consequently, the trend is towards heavier grommet assemblies, often known as hard-shell grommet assemblies, that are larger and capable of handling and accurately locating the larger wire bundles.

These hard-shell grommet assemblies generally include a grommet body formed with a passage through which the wire bundle extends, and they may also provide for the injection of a sealant material into the passage around the wire bundle. Some means is necessary for attaching the heavier grommet body to the bulkhead panel overlying the aperture, since a pop fit will generally be insufficiently strong.

Various means for attaching a hard-shell grommet assembly are disclosed in the prior art. For example US-A-4 289 924 discloses a hard-shell grommet assembly I0 that is attached to a bulkhead panel I4, for overlying an aperture I2 in the panel, by means of bolts or other fasteners that pass through holes in the panel.

An improved means for attaching a grommet assembly that requires no fasteners passing through the bulkhead panel is disclosed in the said US-A-4 407 042, according to which a grommet assembly I0 has a shank 38 that is inserted through an aperture in a bulkhead panel. A U-shaped retainer 22 is then pushed in from the side into tapered slots 54 in the shank 38, to attach and retain the grommet assembly I0. This assembly works well in applications in which there is sufficient access space around the perimeter of the bulkhead panel aperture to in fact allow the retainer to be used. However, in some applications the available access space may be limited by the presence of obstructions or other structures already attached to the bulkhead panel, so rendering such a retainer unsuitable.

The present invention is concerned with a grommet assembly of the type specified above that can be used where access space is limited, as when a bulkhead panel having opposed surfaces and an aperture therethrough has obstructions thereon that limit the space available around the aperture for the attachment of a grommet assembly.

To this end, a grommet assembly in accordance with the present invention is characterised by the features specified in the characterising portion of claim I.

The invention thereby makes available a grommet assembly that is suitable for passing a wire bundle through an aperture in a panel and is attachable to the panel within a limited access space around the panel aperture.

The invention further makes available a grommet assembly that provides a means for snugging up and locking down a bulkhead wire grommet in a limited space.

In a preferred embodiment of a grommet assembly in accordance with the present invention, a grommet body and a retainer work co-operatively within limited access space. The grommet body is formed with a passage through which a wire bundle may extend. The grommet body also has a stop portion in the form of a peripheral stop flange that is engageable with one surface of the bulkhead panel around an aperture therein when the grommet body is placed in an attachment position overlying the aperture with the wire bundle passing through the aperture. The grommet body stop flange is engageable with the one bulkhead panel surface indirectly by way of a resilient gasket that is located between the stop flange and the one surface of the bulkhead panel. When in the attachment position, the grommet body peripheral stop flange defines an attachment envelope that is within the limited access space, and the retainer operates within this attachment envelope.

The grommet body also has a pivot support which, in this preferred embodiment, includes a pair of spaced legs extending from the grommet body and offset to one side thereof. Though offset, the spaced legs are still able to pass through the aperture as the grommet body is placed in the attachment position, and the wire bundle can pass between the spaced legs. Each spaced leg also includes a surface that faces the other surface of the bulkhead panel.

The retainer has at least one pivot member by means of which the retainer may be pivotally joined to the pivot support when the grommet body is in the attachment position. The retainer is so pivotally joined by means of a pair of spaced pivot members that are engageable with the panel-facing surfaces of the spaced legs. The retainer may then be rotated towards the grommet body until a stop portion on the retainer engages the other surface of the bulkhead panel to define an operative position of the retainer. The retainer is sized so that it remains substantially within the attachment envelope as it rotates to the operative position.

In addition, the retainer includes a support member that extends between the spaced pivot members and is located so as to supportingly engage the wire bundle as the retainer rotates to the operative position.

Furthermore, in this preferred embodiment, the retainer also includes a camming member that is cammingly engageable with the other surface of the bulkhead panel as the retainer rotates to the operative position. The camming member biases the retainer pivot members against the surfaces of the spaced legs so as to force the grommet body stop flange and the retainer stop portion towards one another and into engagement with their respective bulkhead panel surfaces. The action of the camming member also compresses the resilient gasket between the stop flange and the one surface of the bulkhead panel to provide a seal between the grommet body and the aperture.

This grommet assembly in accordance with the present invention also includes a locking means that maintains the retainer in the operative position. The locking means thereby maintains the grommet body stop flange and the retainer stop portions engaged with their respective bulkhead panel surfaces, with the grommet assembly attached to the panel within the limited access space. The locking means also maintains the seal of the compressed resilient gasket, and maintains the support member in supporting engagement with the wire bundle.

The invention accordingly makes available a grommet assembly for passing a wire bundle through an aperture in a panel having opposed surfaces, in which the assembly is attachable to the panel within a limited access space around the aperture, and includes a grommet body that has a passage through which the wire bundle may extend and also has a stop portion that engages one surface of the panel when the grommet body is placed in an attachment position overlying the aperture with the wire bundle passing through the aperture, in which attachment position the periphery of the grommet body defines an attachment envelope within the limited access space, the grommet body also including a pivot support extending therefrom and offset to one side thereof while still being able to pass through the aperture as the grommet body is placed in the attachment position, the assembly also including a retainer that has at least one pivot member by means of which the retainer can be pivotally joined to the pivot support when the grommet body is in the attachment position so as to be rotatable towards the grommet body, and the retainer also including a stop portion that is engageable with the other surface of the panel as the retainer rotates to an operative position, and the retainer being sized so as to remain substantially within the attachment envelope as the retainer rotates to the operative position, with locking means being provided to maintain the retainer at the operative rotated position with the grommet body and the retainer stop portions engaged with their respective panel surfaces, thereby attaching the grommet assembly to the panel within the limited access space.

The invention also makes available a grommet assembly of the type described in which the pivot support includes a pair of spaced legs extending from the grommet body and offset to one side thereof while still being able to pass through the panel aperture as the grommet body is placed in the attachment position with the wire bundle passing between the spaced legs, and in which the retainer includes a pair of spaced pivot members by means of which the retainer may be pivotally joined to the spaced legs when the grommet body is in the attachment position so as to be rotatable towards the grommet body to an operative position, and in which the retainer further includes a support member extending between the spaced pivot members and located so as to supportingly engage the wire bundle as the retainer is rotated to the operative position and maintained there by the locking means.

The invention further makes available a grommet assembly of the type described in which the grommet body has a peripheral stop flange that is engageable with one surface of the panel around the aperture when the grommet body is placed in the attachment position with a resilient gasket located between the stop flange and the one surface of the panel, and in which the the pivot support extending from the grommet body also includes a surface facing the other surface of the panel when the grommet body is in the attachment position, and in which the retainer includes a pivot member engageable with the pivot support surface to pivotally join the retainer to the pivot support when the grommet body is in the attachment position, and in which a camming member on the retainer cammingly engages the other surface of the panel as the retainer rotates to the operative position, to bias the retainer pivot member against the pivot support surface and force the grommet body stop flange and the retainer stop portion towards one another to compress the resilient gasket and provide a seal between the grommet body and the aperture as the retainer is rotated to the operative position and maintained there by the locking means.

In the drawings:

Figure I is a fragmentary sectional view, with parts in elevation, through an aperture in a bulkhead panel showing a grommet body of a preferred embodiment of a grommet assembly in accordance with the present invention in an attachment position;

Figure 2 is a fragmentary view on the line 2--2 of Figure I, in the direction of the arrows;

Figure 3 is an end view of the retainer of the grommet assembly shown in Figure I;

Figure 4 is a plan view of the retainer;

Figure 5 is a side view of the retainer;

Figure 6 is a view similar to Figure I but somewhat enlarged and showing the retainer pivotally joined to the grommet body; and

Figure 7 is a view similar to Figure 6 but showing the retainer rotated to an operative position and locked.

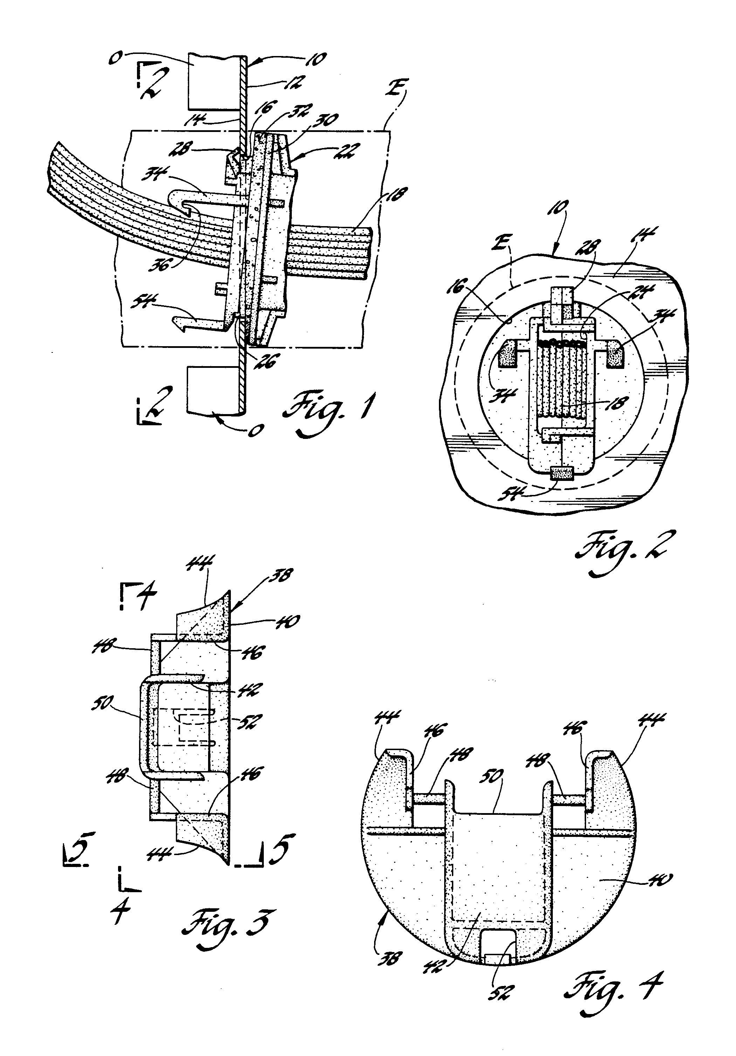

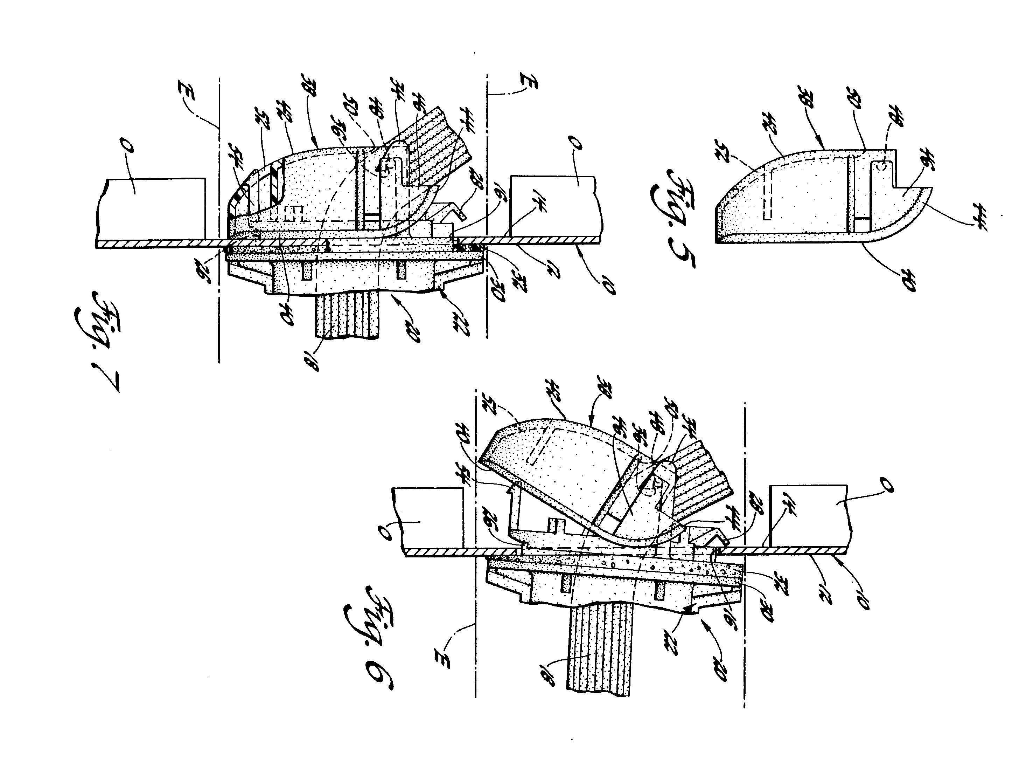

With reference first to Figures I and 2 of the drawings, a bulkhead panel designated generally I0 is formed of generally planar sheet metal with opposed surfaces I2 and I4. The bulkhead panel I0 includes a generally circular aperture I6, best seen in Figure 2, through which a wire bundle I8 is passed. The access space around the aperture I6 that is available for the attachment of any grommet assembly is limited, as by obstructing structures already mounted to the bulkhead panel I0 and designated generally at O in Figure I.

The invention is concerned with a grommet assembly that is attachable to the bulkhead panel I0 for passage of the wire bundle I8 through the aperture I6 in spite of the limited access space.

With reference next to Figure 7, the grommet assembly of the invention is designated generally 20 and is shown after it has been attached to the bulkhead panel I0. As is shown in Figures I and 2, the grommet assembly 20 includes a grommet body, designated generally 22, which is shown partially broken away. The grommet body 22 has a generally central passage 24 through which the wire bundle I8 extends. One of the primary purposes of the grommet body 22 is to protect the wire bundle I8 from the edges of the aperture I6 as the wire bundle I8 is being passed therethrough. Additionally, the grommet body 22 may be of the injectable type, with the wire bundle I8 being held fast within the passage 24 by means of a suitable injected sealant, not illustrated, that also seals the passage 24. As shown in Figure I, the grommet body 22 is in what may be called an attachment position overlying the aperture I6.

The grommet body 22 is placed in the attachment position by initially pulling the wire bundle I8 through the aperture I6 from the surface I2 side of the bulkhead panel I0. Then, a notch 26 is seated over the bottom edge of the aperture I6, with the grommet body 22 spaced away from the bulkhead panel surface I2. Next, the grommet body 22 is pushed to the Figure I position, and a flexible finger 28 snaps past the upper edge of the aperture I6, which it has already done in the position shown in Figure I. The finger 28 retains the grommet body 22 in the attachment position until attachment of the grommet assembly 20 is carried out.

With further reference to Figures I and 2, the grommet body 22 also includes a stop portion in the form of a circular peripheral stop flange 30 that is engageable with the bulkhead panel surface I2 around the aperture I6 when the grommet body 22 is in the attachment position. In the preferred embodiment, the stop flange 30 indirectly engages the bulkhead panel surface I2 by way of a compressible resilient gasket 32 that is located between the stop flange 30 and the surface I2. As is shown in Figure I, the stop flange 30 is partially engaged with the surface I2, and the gasket 32 is partially compressed. The grommet body 22 also includes a pivot support in the form of a pair of spaced legs 34 extending from the grommet body 22 through the aperture I6, each of the legs including a concave surface 36 that faces and is spaced from the bulkhead panel surface I4. The spaced legs 34 are offset to the upper side of the grommet body 22, as best seen in Figure 2. The offset of the spaced legs 34 is intended to be as far from the centre of the grommet body 22 as is feasible, while still allowing the spaced legs 34 to pass without interference through the aperture I6 when the grommet body 22 is placed in the attachment position shown in Figure I, as described above.

It is also clear from Figure I that the wire bundle I8 passes generally between the spaced legs 34. When the grommet body 22 is in the attachment position, the circular peripheral stop flange 30 in effect defines an imaginary cylindrical attachment envelope, designated E, which is within the limited access space discussed above. The grommet assembly 20 in acordance with the invention may be attached to the bulkhead panel I0 by a means that operates substantially within that attachment envelope E, as will be described below.

With reference next to Figures 3 to 5, the grommet assembly 20 in accordance with the invention is attached to the bulkhead panel I0 by means of a retainer, designated generally 38, that is moulded as one piece from plastics or other suitable material. The basic structure of the retainer 38 includes a substantially flat base 40 and a central body portion 42 that is generally normal to the base 40 and is generally U-shaped in cross-section. The base 40 is curved up at two locations to form a pair of camming members 44, as best seen in Figure 5. A pair of support struts 46 integral with the camming members 44 extend generally normal to the base 40, outboard of and spaced from the sides of the body portion 42. A pair of pivot members are provided by a pair of coaxial pivot pins 48 that are moulded between the support struts 46 and the sides of the central body portion 42, as best seen in Figure 4. The pivot pins 48 are spaced from each other by approximately the same spacing as the spaced legs 34 of the grommet body 22. The pivot pins 48 are also spaced from the base 40, as best seen in Figure 3, by a distance that allows the camming members 44 to operate. Also, an edge 50 of the body portion 42 extends generally between the pivot pins 48. As is seen in Figure 5, the edge 50 is also spaced from the base 40, at a location which allows it to supportingly engage the wire bundle 18. Further, a locking means for the retainer 38 includes a generally square window 52 moulded through the body portion 42, and a flexible hook 54 on the grommet body 22, best seen in Figure I.

The operation of the camming members 44, the edge 50 and the locking means will be best understood by referring to the description of the actual attachment of the grommet assembly 20, described below.

The attachment of the grommet assembly 20 is shown in Figures 6 and 7. With reference first to Figure 6, with the grommet body 22 in the attachment position the pivot pins 48 are snapped into the concave surfaces 36, thereby pivotally joining the retainer 38 to the spaced legs 34 so that the retainer may be rotated counterclockwise towards the grommet body 22. The pivot pins 48 are spaced sufficiently from the retainer base 40 to allow the camming members 44, as the retainer 38 rotates, to begin to cammingly engage the bulkhead panel surface 14. Therefore, as the retainer 38 continues to rotate, the engagement of the camming members 44 with the surface 14 will bias the pivot pins 48 out against the concave surfaces 36, so forcing the grommet body stop flange 30 and the retainer base 40 towards one another. Concurrently, the resilient gasket 32 is further compressed between the stop flange 30 and the bulkhead panel surface 12, and provides a seal between the grommet body 22 and the aperture 16.

An operator may gain a mechanical advantage in compressing the resilient gasket 32 by pushing on the most peripheral portion of the retainer 38, which is near the window 52. The lever arm of that mechanical advantage, measured from the spaced legs 34 to the peripheral portion of the retainer 38, is maximised by offsetting the spaced legs 34 from the centre of the grommet body 22 as far as possible, as described above. The relatively large surface area of the camming members 44 serves to distribute the force of their engagement over the bulkhead panel surface 14, which is advantageous for bulkhead panels 10 formed of relatively thin sheet metal.

Concurrently with the rotation of the retainer 38 and the compression of the gasket 32, the edge 50 of the body portion 42, by virtue of its location described above, begins to engage the wire bundle 18. The edge 50, as it engages the wire bundle 18, pushes the wire bundle upwardly and supports it, which is sometimes referred to as "dressing" the wire bundle. An important aspect is that the retainer 38 is sized so that as it rotates it remains substantially within the attachment envelope E.

With further reference to Figures 6 and 7, the counterclockwise rotation of the retainer 38 continues from the Figure 6 position until the base 40 engages the bulkhead panel surface 14, as seen in Figure 7. Thus, the retainer base 40 acts as a stop portion and defines what may be called an operative rotated position of the retainer 38. At this operative rotated position, the flexible hook 54 snaps through the window 52, to the position shown in Figure 7. The retainer 38 is thereby maintained locked in the operative position. Once the retainer 38 is locked in the operative rotated position, the grommet body stop flange 30 is maintained tightly engaged with the bulkhead panel surface 12, although that engagement is made indirectly by way of the resilient gasket 32, which is now fully compressed. Also, at the operative rotated position the retainer base 40 is maintained tightly engaged with the opposed bulkhead panel surface 14. The grommet assembly 20 is therefore effectively attached to the bulkhead panel 10, and its attachment has been achieved by working substantially within the limited access space of the attachment envelope E. Furthermore, at the operative rotated position the locking retainer 38 maintains the seal of the compressed gasket 32. In addition, the edge 50 of the retainer body portion 42 is maintained in supporting engagement with the wire bundle 18, which is now fully upwardly dressed.

In the preferred embodiment of a grommet assembly in accordance with the present invention as described, important features are the retainer 38 with its camming members 44 and pins 48, and the grommet body 22 with its spaced legs 34 and concave surfaces 36. As described, when the retainer 38 is pivoted to the grommet body 22 by hooking the pins 48 into the concave surfaces 36, the retainer may then be pushed down, so forcing the camming surfaces 44 into the bulkhead panel 10, and so snugging up the gasket 32, all within the confined space of the envelope E, as well as locking the grommet body 22 in place. Also, the pivotal attachment of the retainer 38 provides a lever arm to assist in the snugging-up process.

Variations in the preferred embodiment described are possible within the scope of the claims. Thus the resilient gasket 32 is not strictly necessary for the attachment of the grommet assembly 20, although it is desirable for practical reasons, and its compression is co-operatively and conveniently provided by the rotation of the retainer 38. Also, the edge 50 of the retainer body portion 42 could if necessary be cut back further, so that it never engaged or supported the wire bundle 18, although that support is also desirable in practice, and is also co-operatively and conveniently provided by the same rotation of the retainer 38.

## Claims

1. A grommet assembly for passing a wire bundle (18) through an aperture (16) in a panel (10) having opposed surfaces (12,14), the grommet assembly (20) being attachable to the panel (10) within a limited access space around the aperture (16), in which a grommet body (22) has a passage (24) formed therein through which a wire bundle (18) may extend, the grommet body (22) also has a stop portion (30) that is engageable with one surface (12) of the panel (10) when the grommet body - (22) is placed in an attachment position overlying the aperture (16) with the wire bundle (18) passing through the aperture (16), and the grommet body - (22) has a periphery defining, when in the attachment position, an attachment envelope (E) within the limited access space, and in which the grommet assembly (20) includes a retainer (38) which, when the stop portion (30) of the grommet body - (22) is in engagement with the one surface (12) of the panel (10), can co-operate with the grommmet body (22) to retain the grommet body (22) attached to the panel (10) with the stop portion (30) of the grommet body (22) in engagement with the one surface (12) of the panel (10), characterised in that a pivot support (34,36) extends from the grommet body (22) and is offset to one side thereof while still being able to pass through the aperture (16) in the panel (10) as the grommet body (22) is placed in the attachment position, the retainer (38) includes at least one pivot member (48) by means of which the retainer (38) may be pivotally joined to the pivot support (34,36) when the grommet body - (22) is in the attachment position so as to be rotatable towards the grommet body (22), the retainer (38) further includes a retainer stop portion - (40) that is engageable with the other surface (14) of the panel (10) as the retainer (38) rotates to an operative position, the retainer (38) further is sized so as to remain substantially within the attachment envelope (E) as the retainer (38) rotates to the operative position, and locking means (54,52) maintains the retainer (38) in the operative rotated position with the stop portions of the grommet body - (22) and of the retainer (38) engaged with their respective panel surfaces (12,14), whereby the grommet assembly (20) is thereby attached to the panel (10) within the limited access space.

2. A grommet assembly according to claim 1, characterised in that the pivot support (34,36) includes a pair of spaced legs (34) and in the attachment position the wire bundle (18) passes between the spaced legs (34), the retainer (38) includes a pair of the spaced pivot members (48) by means of which the retainer (38) may be pivotally joined to the spaced legs (34) when the grommet body (22) is in the attachment position, and the retainer (38) also includes a support member (50) extending between the spaced pivot members (48) and located so as to supportingly engage the wire bundle (18) as the retainer (38) rotates to the operative position, whereby when the grommet assembly - (20) is attached to the panel (10) the support member (50) is maintained in supporting engagement with the wire bundle (18).

3. A grommet assembly according to claim 1 or 2, characterised in that the stop portion of the grommet body (22) comprises a peripheral stop flange (30) that is engageable with the one surface (12) of the panel (10) around the aperture (16) in the panel (10), whereby the stop flange (30) defines the attachment envelope (E), the pivot support (34,36) further includes a surface (36) facing the other surface (14) of the panel (10), the retainer (38) includes a pivot member (48) as aforesaid engageable with the pivot support surface (36) to pivotally join the retainer (38) to the pivot support - (34,36) when the grommet body (22) is in the attachment position, a camming member (44) on the retainer (38) is cammingly engageable with the other surface (14) of the panel (10) as the retainer - (38) rotates to the operative position to bias the retainer pivot member (48) against the pivot support surface (36) so as to force the grommet body stop flange (30) and the retainer stop portion (40) towards one another, a resilient gasket (32) is located between the grommet body stop flange (30) and the one surface (12) of the panel (10) so as to be compressed against the one surface (12) of the panel (10) by the grommet body stop flange (30) as the retainer (38) rotates to the operative position and the camming member (44) forces the grommet body stop flange (30) and the retainer stop portion (40) towards one another, thereby providing a seal between the grommet body (22) and the panel surface (12) around the aperture (16), and the lock-

ing means (52,54) maintains the retainer (38) in the operative rotated position with the grommet body stop flange (30) and the retainer stop portion (40) engaged with their respective panel surfaces (I2,I4), whereby the grommet assembly (22) is attached to the panel (J0) within the limited access space with the compressed resilient gasket seal maintained.

Fig. 1

Fig. 2

Fig. 3

Fig. 4

*Fig. 5*

*Fig. 6*

*Fig. 7*